# EUROPÄISCHE PATENTSCHRIFT

(11) **EP 1 344 758 B1**
(45) Veröffentlichungstag und Bekanntmachung des Hinweises auf die Patenterteilung: **04.07.2007**
(21) Anmeldenummer: 03004588.4
(22) Anmeldetag: 28.02.2003
(51) Int. Cl.: B22F 3/14, C04B 35/645, B28B 3/02, B23D 61/18, C04B 35/52

(54) **Verfahren zur Herstellung eines diamanthaltigen Werkzeugselementes und Vorrichtung hierfür**
Method of production of a diamond containing tool element and device therefor
Procédé de fabrication d'un élément d'un outil contenant du diamant et dispositif à cet effet

(30) Priorität: 11.03.2002 DE 10211604
(43) Veröffentlichungstag der Anmeldung: 17.09.2003
(73) Patentinhaber: Dr. Fritsch Sondermaschinen GmbH, 70736 Fellbach (DE)
(72) Erfinder: Bahr, Thomas, 71573 Allmersbach i.T. (DE); Weber, Gerhard, 71364 Winnenden (DE)
(74) Vertreter: Patentanwälte Ruff, Wilhelm, Beier, Dauster & Partner

(56) Entgegenhaltungen:
- DE-A1- 4 104 788
- GB-A- 605 261
- DATABASE WPI Section Ch, Week 199105 Derwent Publications Ltd., London, GB; Class L02, AN 1991-035240 XP002327167 & SU 1 569 071 A (RYAZAN HEAVY FORGE) 7. Juni 1990 (1990-06-07)
- DATABASE WPI Section Ch, Week 199201 Derwent Publications Ltd., London, GB; Class M22, AN 1992-005295 XP002327168 & SU 1 623 833 A (AS UKR HARD MATERIALS) 30. Januar 1991 (1991-01-30)
- Mai 1982 (1982-05), S.VATHILAKIS, DISSERTATION IN TU WIEN , XP002327180 * Seiten 1,100 - Seite 102 *

## Beschreibung

Die Erfindung betrifft ein Verfahren zum Herstellen eines diamanthaltigen Werkzeugsegmentes, das aus einem kaltgepressten, hülsenförmigen Grünling gesintert wird. Die Erfindung betrifft auch eine Vorrichtung zur Durchführung des Verfahrens zum Herstellen eines diamanthaltigen Werkzeugsegmentes. Die Erfindung betrifft schließlich ein Verfahren zum Herstellen von kaltgepressten Grünlingen, die in einem späteren Verfahrensgang zu Diamantperlen für Diamantsägeseile endgefertigt werden.

Es ist allgemein bekannt, Werkzeugsegmente aus einem diamanthaltigen Werkstoff zu fertigen, um eine besonders hohe Verschleißfestigkeit zu erzielen. Als Werkzeugsegmente werden insbesondere Diamantperlen eingesetzt, die auf einem Diamantseil für Block- oder Kontursägen zum Schneiden von Stein, insbesondere von Granit, Marmor und ähnlichem, eingesetzt werden. Eine derartige Diamantperle weist eine vorzugsweise zylindrische Diamantbelaghülse auf, die einen Trägerkörper koaxial ummantelt, der fest mit einer Seilseele des Diamantseiles verbunden ist. Zur Herstellung der Diamantperle wird der diamanthaltige Werkstoffbelag pulverförmig vorgegeben und mittels einer Kaltpressung zu einem hülsenförmigen Grünling vorgeformt. Anschließend wird der hülsenförmige Grünling auf einen metallischen und vorzugsweise zylindrischen Trägerkörper aufgesteckt und unter hohen Temperaturen und hohem Druck auf den Trägerkörper aufgesintert. Zum Sintern des Grünlings sind verschiedene Verfahren bekannt. Zum einen ist es möglich, den Grünling manuell in eine Graphitform einzusetzen und diese zu erhitzen, wobei die Formteile selbst gegeneinander verschiebbar sind, um den notwendigen Pressdruck aufzubringen (DE 195 29 530 C1). Es ist auch möglich, eine Sinterung in einem Vakuum- oder Schutzgasofen vorzunehmen. Mittels dieses Vakuumsinterverfahrens ist für die Diamantbelaghülse keine so hohe Enddichte erzielbar wie in einer Graphitform. Schließlich ist es möglich, die Sinterung in einem Gasdrucksinterofen vorzunehmen. Dort werden die Grünlinge in Glasröhrchen eingeschoben und neben der hohen Temperatur einem extrem hohen Druck von ca. 2000 bar gesetzt. Bei allen Verfahren besteht für die Grünlinge eine relativ lange Verweildauer in der jeweiligen Sintervorrichtung, so dass die Grünlinge relativ lange Zeit den sehr hohen Temperaturen ausgesetzt sind. Um diese lange Temperatureinflussnahme unbeschadet aushalten zu können, müssen hochwertige Werkstoffe eingesetzt werden.

Aufgabe der Erfindung ist es, ein Verfahren und eine Vorrichtung der eingangs genannten Art zu schaffen, die eine kostengünstige Herstellung von diamanthaltigen Werkzeugsegmenten ermöglichen.

Diese Aufgabe wird für das Verfahren dadurch gelöst, dass der Grünling axial in eine offene Seite einer formgenau auf den Grünling abgestimmten Aufnahme eingebracht wird, die vor dem Einbringen des Grünlings bereits zumindest weitgehend auf Sintertemperatur erhitzt worden ist, und dass anschließend der Grünling koaxial zur Aufnahme wenigstens von der offenen Seite der Aufnahme her mit dem Sinterdruck beaufschlagt wird. Erfindungsgemäß wird der Grünling in die heiße Form eingebracht und separat druckbeaufschlagt. Die Druckbeaufschlagung und die Temperaturbeaufschlagung sind somit getrennten, unabhängig voneinander wirkenden Einheiten zugeordnet. Die Aufnahme, in deren Flucht auch die Druckbeaufschlagung erfolgt, ist derart auf die Außenabmessungen des Grünlings abgestimmt, dass der Grünling bei einer Druckbeaufschlagung keine radiale Ausweichmöglichkeit besitzt. Die Aufnahme umschließt den Grünling somit bündig. Da die Matrize zumindest in einem die Aufnahme umgebenden Bereich sowohl verschleißfest als auch bei den auftretenden Sintertemperaturen formstabil gestaltet ist, ist während des Sintervorgangs eine Maßhaltung des Grünlings und damit des diamanthaltigen Werkzeugsegmentes gewährleistet. Da die Druckbeaufschlagung durch unabhängige Mittel erfolgt, ist es möglich, die Matrize stets im heißen Zustand, d.h. auf Sintertemperatur, zu belassen, wodurch die Grünlinge in der Matrize für die Erhitzung und Druckbeaufschlagung lediglich eine relativ kurze Verweildauer benötigen. Dadurch ist es möglich, für die Herstellung von Diamantperlen für Diamantsägeseile auch geringwertige Werkstoffe einzusetzen, ohne dass hierdurch die Qualität der Diamantperlen beeinträchtigt wird. Schließlich ist es auch möglich, eine Automatisierung des Sintervorgangs vorzunehmen, indem die Aufnahme in der Matrize automatisch beschickt und mit Druck beaufschlagt wird. Auch das Auswerfen der fertigen Werkzeugsegmente kann automatisch erfolgen.

Für die erfindungsgemäße Vorrichtung wird die Aufgabe dadurch gelöst, dass zur Aufnahme des Grünlings eine zu wenigstens einer Seite hin offene Aufnahmekammer einer Matrize vorgesehen ist, der wenigstens ein von der offenen Seite der Aufnahmekammer auf den Grünling einen Sinterdruck aufbringendes Pressmittel zugeordnet ist, und die von einer Heizeinrichtung umgeben ist, die die Aufnahmekammer auf Sintertemperatur erhitzen kann. Als Pressmittel sind insbesondere zwei koaxial zueinander angeordnete und in zueinander entgegengesetzten Richtungen druckbeaufschlagbare Pressstempel vorgesehen, die von gegenüberliegenden Seiten her in eine als Aufnahmekammer dienende und zu beiden Seiten hin offene Aufnahmeröhre eintauchen. Die Pressstempel üben den zum Sintern notwendigen Pressdruck aus.

In weiterer Ausgestaltung der Vorrichtung ist die Aufnahmekammer als über ihre gesamte Länge mit gleichbleibendem Querschnitt versehene Aufnahmeröhre gestaltet, wobei der Röhrenquerschnitt auf einen Querschnitt des zu sinternden Grünlings derart abgestimmt ist, dass der Grünling passgenau axial in die Aufnahmeröhre eintaucht. Hierdurch wird gewährleistet, dass bei einer Druckbeaufschlagung durch die Pressstempel das Material des Grünlings nicht zur Seite, d.h. radial, ausweichen kann. Zudem ermöglicht die umlaufende Anlage des Grünlings an der Innenwandung der Aufnahmeröhre eine gute Wärmeübertragung, die eine schnelle Aufheizung des Grünlings gewährleistet. Durch die außenbündige Gestaltung der Aufnahmeröhre relativ zum jeweils zu sinternden Grünling kann das Material des Grünlings bei einer Druckbeaufschlagung von gegenüberliegenden Seiten her lediglich nach innen zum Trägerkörper hin ausweichen, wodurch die kraft-, formund/oder stoffschlüssige Verbindung mit dem Trägerkörper verbessert wird.

In weiterer Ausgestaltung der Erfindung ist die Matrize wenigstens in einem die Aufnahmekammer ummantelnden Umgebungsbereich zumindest abschnittsweise aus einem verschleißfesten und bei Sintertemperaturen formstabilen, wärmeleitenden Werkstoff hergestellt. Hierdurch ist eine maßgenaue und schnelle Sinterung gewährleistet. Die Matrize behält somit im Bereich der Aufnahmekammer ihre exakt auf den zu sinternden Grünling abgestimmte Dimensionierung bei, so dass die Aufnahmekammer eine hohe Maßhaltigkeit gewährleistet, die eine zuverlässige und einwandfreie Sinterung sicherstellt.

In weiterer Ausgestaltung der Erfindung ist die Matrize zumindest abschnittsweise rotationssymmetrisch gestaltet und von einem Isolationsmantel umgeben. Der Isolationsmantel verhindert eine starke Wärmeabstrahlung nach außen. Die rotationssymmetrische Gestaltung ermöglicht eine umlaufend gleichmäßige und schnelle Aufheizung der Aufnahmekammer und damit des Grünlings, wobei die Aufnahmekammer koaxial zu einer Mittellängsachse der Matrize angeordnet ist.

In weiterer Ausgestaltung der Erfindung sind die gegenüberliegenden Pressstempel an ihren Stirnflächen mit jeweils einem Ringbund versehen, der ohne Axialbelastung der Stirnfläche eines koaxial in dem hülsenförmigen Grünling fixierten Trägerkörpers axial auf die zugeordnete Gegenstirnfläche des Grünlings einen für die Sinterung notwendigen Pressdruck ausübt. Vorzugsweise ist die Höhe des Ringbundes wenigstens so groß, wie der axiale Stauchungs-Sollbetrag der zugeordneten Gegenstirnfläche des Grünlings. Dadurch ist gewährleistet, dass bei Einbringen einer fixierten Einheit aus Grünling und Trägerkörper in die Aufnahmeröhre die Pressstempel lediglich den Grünling mit Druck beaufschlagen und den innenliegenden Trägerkörper aussparen. Eine Deformation oder in anderer Form nachteilige Belastung des Trägerkörpers wird dadurch vermieden.

In weiterer Ausgestaltung der Erfindung ist wenigstens ein Pressstempel als die fertig gesinterte Diamantperle ausstoßender Auswerfer beweglich gestaltet. Dadurch übernimmt dieser Pressstempel eine Doppelfunktion, indem er zunächst den notwendigen Pressdruck aufbringt und nach dem Sintern die Diamantperle automatisch auswirft.

Erfindungsgemäß ist auch ein Verfahren zum Herstellen von kaltgepressten Grünlingen vorgesehen, die in einem späteren Verfahrensgang zu Diamantperlen für Diamantsägeseile endgefertigt werden. Bei einem derartigen Verfahren wird ein pulverförmiger Diamantbelag in einer ersten Verfahrensstufe durch Kaltpressen zu einer Formhülse vorverdichtet, anschließend wird koaxial in die Formhülse ein Trägerkörper mit Spiel eingesetzt, und schließlich wird in einer zweiten Verfahrensstufe die Formhülse auf dem Trägerkörper zu einem kaltgepressten Grünling unter Umspannung des Trägerkörpers endverdichtet. Dadurch wird bereits nach dem Kaltpressen eine feste und zuverlässige Verbindung zwischen dem Grünling und dem Trägerkörper erzielt, wodurch sich eine einfache Handhabung der fixierten Einheit aus Grünling und Trägerkörper ergibt. Durch das zweistufige Kaltpressen ist es zudem möglich, auch Trägerkörper einzusetzen, die mit Außenprofilierungen, insbesondere mit einer Rändelung, versehen sind. Hierdurch wird zwischen dem Grünling und dem Trägerkörper eine verbesserte Verbindung erreicht, da neben dem Kraftschluss sowie dem zusätzlichen, nach der Sinterung erfolgenden Stoffschluss auch noch ein Formschluss zwischen Grünling bzw. Diamantbelaghülse und Trägerkörper erzielt wird.

Die Kaltpresse und die Sintervorrichtung gemäß der Erfindung sind vorzugsweise in einer Anlage zur Herstellung von Diamantperlen für Diamantsägeseile integriert, wobei zwischen der Kaltpresse und der Sintervorrichtung eine Trennmittelauftragsvorrichtung vorgesehen ist, und wobei die Kaltpresse, die Trennmittelauftragsvorrichtung und die Sintervorrichtung durch Fördereinrichtungen miteinander verbunden sind, mittels derer die fixierten Einheiten aus Grünlingen und Trägerkörper automatisch von der Kaltpresse zur Trennmittelauftragsvorrichtung und weiter zur Sintervorrichtung förderbar sind. Dadurch ist eine Automatisierung der Diamantperlenherstellung ermöglicht. Der Trennmittelauftrag auf den Grünling gewährleistet nach dem Sintern eine einfache Entformung aus der Aufnahmeröhre und damit aus der Matrize.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.

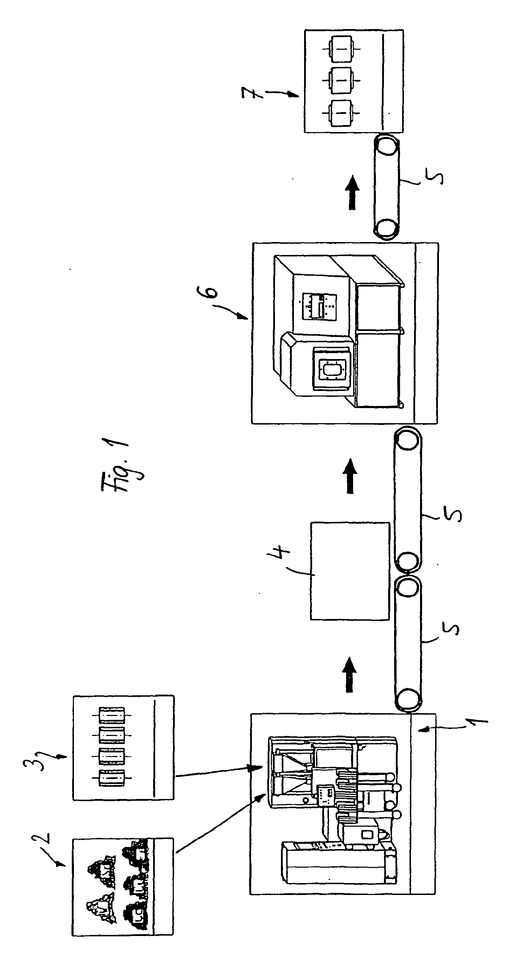

- Fig. 1: zeigt schematisch eine Anlage mit einer Ausführungsform einer erfindungsgemäßen Kaltpresse sowie einer Ausführungsform einer erfindungsgemäßen Sintervorrichtung,
- Fig. 2 bis 8: schematisch verschiedene Verfahrensschritte innerhalb der Kaltpresse zur Herstellung einer fixierten Einheit aus hülsenförmigem Grünling und innenliegendem Trägerkörper und
- Fig. 9: schematisch in einer Schnittdarstellung die Ausführungsform der erfindungsgemäßen Sintervorrichtung zur Herstellung von Diamantperlen.

Eine Anlage zur Herstellung von diamantförmigen Werkzeugsegmenten in Form von Diamantperlen für Diamantsägeseile weist eine Kaltpresse 1 auf, in der - wie nachfolgend näher beschrieben werden wird - zum einen ein pulverförmiger diamanthaltiger Werkstoff zu einem als zylindrische Hülse gestalteten Grünling vorgeformt wird. Zum anderen wird in der Kaltpresse 1 ein als Trägerhülse ausgebildeter Trägerkörper aus einem metallischen Werkstoff koaxial in den Grünling eingebracht, so dass der Grünling den Trägerkörper außen ummantelt. Nach dem Verlassen der Kaltpresse 1 ist der Grünling fest mit dem Trägerkörper verbunden, so dass Grünling und Trägerkörper als fixierte Einheit gemeinsam gehandhabt werden können.

Das diamanthaltige Werkstoffpulver ist in einem Vorratsbehälter 2 untergebracht, aus dem es portioniert der Kaltpresse zugeführt wird. Die hülsenförmigen Trägerkörper sind ebenfalls in einem Vorratsspeicher 3 untergebracht, aus dem sie stückweise für die Verbindung mit dem diamanthaltigen Werkstoffpulver automatisch entnommen werden.

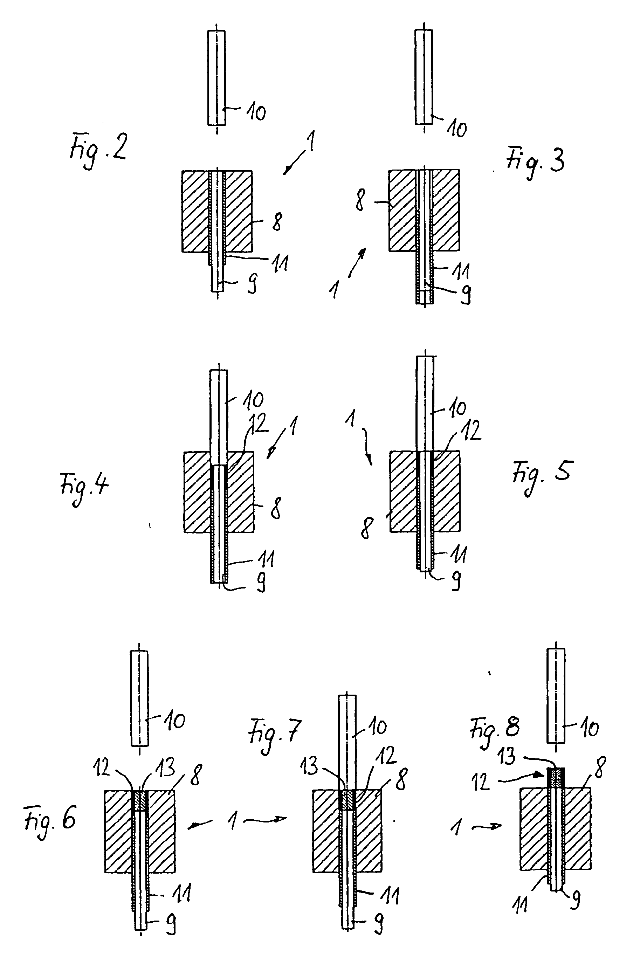

Die Kaltpresse 1 weist gemäß den Fig. 2 bis 8 eine Werkzeugform auf, die mit einer vertikal ausgerichteten, die Werkzeugform 8 durchsetzenden, vorliegend gemäß einem zylindrischen Kanal gestalteten Aufnahmekammer versehen ist. Von oben her ist der Aufnahmekammer ein oberer Druckstempel 10 zugeordnet, der durch eine Vertikalbewegung nach unten koaxial in die Aufnahmekammer eintauchen kann. Vom gegenüberliegenden Stirnende her ist der Aufnahmekammer ein zweiteiliger Druckstempel 9, 11 zugeordnet, der eine äußere Stempelhülse 11 und einen inneren Stempelkern 9 aufweist, die unabhängig voneinander koaxial in die Aufnahmekammer eintauchen können. Der kreisförmige Querschnitt der Aufnahmekammer ist auf den Außenquerschnitt des Grünlings abgestimmt, d.h. auf einen Außenquerschnitt, den das diamanthaltige Werkstoffpulver nach dem Verdichten als Grünling haben soll. Auch die Querschnitte der Druckstempel 9 bis 11 sind auf die Dimensionierung des Grünlings abgestimmt. Dabei entspricht die Wandungsdicke der Stempelhülse 11 der Wandungsdicke des gefertigten, hülsenförmigen Grünlings und der Durchmesser des Stempelkerns 9 zumindest ungefähr dem Außendurchmesser der metallischen Trägerhülse.

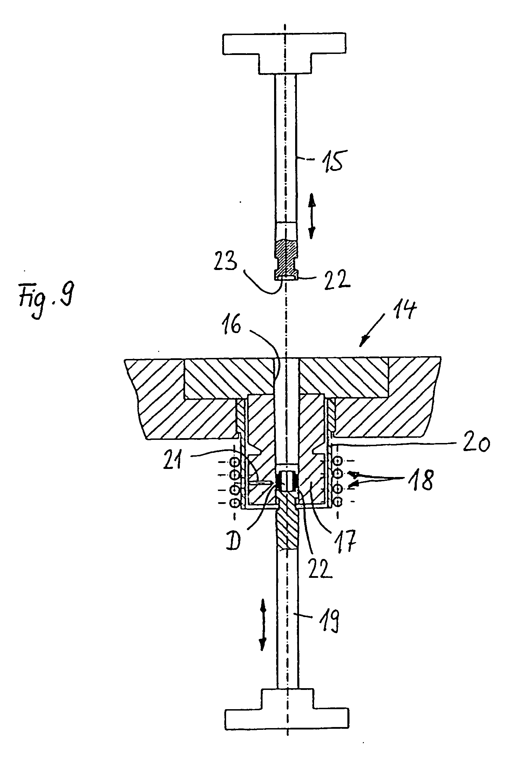

In einem ersten Verfahrensschritt wird zunächst das diamanthaltige Werkstoffpulver in eine durch Nachuntenfahren der Stempelhülse 11 gebildete, ringspaltförmige Kavität eingebracht (Fig. 3). Dabei verbleibt der Stempelkern 9 in seiner oberen, die Aufnahmekammer vollständig durchsetzenden Ausstoßposition, in der seine Stirnfläche bündig mit der Oberseite der Werkzeugform 8 abschließt (Fig. 2 und 3). Lediglich die Stempelhülse 11 ist aus ihrer oberen Ausstoßposition (Fig. 2) nach unten verfahren (Fig. 3). Die benötigte Pulvermenge wird mittels einer Dosiervorrichtung aus dem Vorratsbehälter 2 entnommen und der gebildeten Kavität zugeführt. Anschließend verfährt der obere Druckstempel 10 nach unten, wobei er zunächst mit der Stirnfläche des Stempelkerns 9 auf Anschlag fährt und anschließend gemeinsam mit diesem nach unten bewegt wird (Fig. 4). Jetzt erfolgt eine Vorverdichtung des diamanthaltigen Werkstoffpulvers zu einer Formhülse 12. Die Vorverdichtung wird so vorgenommen, dass das Pulver eigenstabil in seiner hülsenförmigen Form auch nach Wegnahme der Stützung durch den Stempelkern verbleibt. Die Vorverdichtung liegt jedoch unter der für den kaltgepressten Grünling erforderlichen Endverdichtung. Nach dem Vorverdichten wird die Formhülse 12 so weit nach oben bewegt, bis ihr oberer Stirnrand bündig mit der Oberseite der Werkzeugform 8 abschließt (Fig. 5). Nun wird automatisch eine Trägerhülse aus dem Vorratsspeicher 3 zugeführt und koaxial in die Formhülse 12 eingeführt. Zum Einsetzen der Trägerhülse 13 verfährt der Stempelkern 9 um einen Betrag nach unten, der der Länge der Trägerhülse 13 entspricht. Die Trägerhülse 13 schließt somit in diesem Verfahrensschritt gemäß Fig. 6 bündig mit dem oberen Stirnrand der Formhülse 12 und mit der Oberseite der Werkzeugform ab. Nun wird der obere Druckstempel 10 nach unten verfahren, um als Gegenhalter für die Trägerhülse 13 und die Formhülse 12 zu dienen. Gleichzeitig erfolgt die Endverdichtung durch ein Nachobendrücken der Stempelhülse 11 (Fig. 7), so dass die Formhülse 12 nunmehr als Grünling fertiggestellt ist. Durch die Endverdichtung wird der Grünling auch radial nach innen auf die Trägerhülse 13 aufgepresst. Die Trägerhülse 13 ist vorzugsweise mit einer Außenrändelung versehen, so dass der Grünling zusätzlich zu dem durch die Pressung erfolgten Kraftschluss auch formschlüssig auf der Trägerhülse 13 aufsitzt. Die nunmehr fixierte Einheit aus Grünling 12 und Trägerhülse 13 wird gemäß Fig. 8 nach oben ausgestoßen und mittels einer Greifervorrichtung ergriffen und durch eine Fördereinrichtung in Form einer Förderstrecke 5 zu der nächsten Station innerhalb der Anlage gefördert.

In der Trennmittelauftragsvorrichtung 4 wird auf den Grünling ein Trennmittel aufgebracht, um nach dem späteren Sintern eine einfache und zuverlässige Entformung zu gewährleisten. Die Fördereinrichtung fördert die fixierte Einheit aus Trägerhülse 13 und Grünling 12 mittels einer weiteren Förderstrecke 5 zu der Sintervorrichtung 6, die unter Zuhilfenahme der Fig. 9 näher beschrieben wird.

Die Sintervorrichtung 6 weist automatische Zuführ- und Entnahmeeinrichtungen für die fixierten Einheiten aus Grünlingen 12 und Trägerhülsen 13 auf, die hier nicht näher dargestellt sind. Zudem ist die Sintervorrichtung gemäß Fig. 9 mit einer Matrize 14 versehen, die mit einer im dargestellten Ausführungsbeispiel vertikalen, die Matrize 14 vollständig durchsetzenden Aufnahmeröhre 16 versehen ist. Die als Aufnahmekammer dienende Aufnahmeröhre 16 weist einen Kreisquerschnitt auf, der auf den Kreisquerschnitt des Grünlings 12 derart abgestimmt ist, dass der Grünling zumindest weitgehend frei von radialem Spiel koaxial zu einer Mittellängsachse der Aufnahmeröhre 16 in die Aufnahmeröhre einschiebbar ist. Die Matrize 14 ist mehrteilig ausgeführt. In einem Sinterbereich ist ein rotationssymmetrisch gestalteter Matrizenabschnitt 17 vorgesehen, der von einem Isolationsmantel 20 umgeben ist. Durch den Isolationsmantel 20 wird verhindert, dass die Hitze des auf Sintertemperatur aufgeheizten Matrizenabschnittes 17 auf die übrigen Teile der Matrize 14 oder nach außen abstrahlt. Zudem ist dem Matrizenabschnitt 17 eine Heizeinrichtung 18, vorliegend in Form einer Heizwendel, zugeordnet, um den Matrizenabschnitt 17 auf Sintertemperatur aufheizen zu können. In den Matrizenabschnitt 17 ist zudem eine Radialbohrung 21 eingebracht, die zur Aufnahme eines Temperatursensors dient. Der Matrizenabschnitt 17 ist aus einem verschleißfesten und auch bei Sintertemperaturen formstabilen Werkstoff hergestellt.

Der nach oben und nach unten offenen Aufnahmeröhre 16 sind zwei Pressstempel 15, 19 zugeordnet. Ein oberer Pressstempel 15 ist koaxial zur Mittellängsachse der Aufnahmeröhre 16 ausgerichtet und derart vertikal beweglich angeordnet, dass er in die Aufnahmeröhre 16 eintauchen kann. Der untere Pressstempel 19 ist koaxial zu dem oberen Pressstempel 15 und damit auch koaxial zur Aufnahmeröhre 16 ausgerichtet und taucht von unten her in das untere Ende der Aufnahmeröhre 16 ein.

Sowohl der obere Pressstempel 15 als auch der untere Pressstempel 19 sind jeweils mit einer Stempelfläche versehen, die einen Ringbund 22 aufweist. Der Ringbund 22 umschließt somit eine kreisförmige Aussparung 23. Der Durchmesser der Aussparung 23 entspricht dem Außendurchmesser der Trägerhülse 13. Der jeweilige Ringbund 22 jedes Pressstempels 15, 19 dient dazu, lediglich den Grünling 12 mit dem zusätzlichen Sinterdruck zu beaufschlagen, ohne gleichzeitig die Trägerhülse 13 zu belasten, d.h. insbesondere zu deformieren.

Für einen Sintervorgang wird der Matrizenabschnitt 17 mittels der Heizeinrichtung 18 auf Sintertemperatur vorgeheizt, d.h. so weit vorgeheizt, dass in der Aufnahmeröhre 16 im Bereich des Matrizenabschnittes 17 die benötigte Sintertemperatur herrscht. Nun wird die fixierte Einheit aus Grünling 12 und Trägerhülse 13 von oben her axial in die Aufnahmeröhre 16 eingeführt. Der untere Pressstempel 19 ist so weit in den Matrizenabschnitt 17 hineinverfahren, dass er die fixierte Einheit stützt. Nun wird durch Nachuntenfahren des oberen Pressstempels 15 der benötigte Sinterdruck auf den Grünling aufgebracht, wobei der Ringbund 22 des unteren Pressstempels 19 als entsprechender Gegenhalter dient. Innerhalb äußerst kurzer Zeit ist der gewünschte Sintervorgang erfolgt. Die fertige Diamantperle D ist geschaffen. Die Verweildauer der fixierten Einheit aus Grünling und Trägerhülse in der durch die Aufnahmeröhre gebildeten Sinterkammer beträgt vorzugsweise zwischen 15 Sekunden und 2 Minuten, so dass in einem äußerst schnellen Zyklus die erneute Beschickung der nächsten fixierten Einheit erfolgen kann. Nach der Beendigung des Sintervorgangs wird die Diamantperle D durch den unteren Pressstempel nach oben ausgestoßen und dort vorzugsweise durch eine mechanische Entnahmevorrichtung entfernt und zum Auskühlen in ein geeignetes Behältnis überführt.

## Patentansprüche

1. Verfahren zum Herstellen eines diamanthaltigen Werkzeugsegmentes, das aus einem kaltgepressten Grünling gesintert wird, **dadurch gekennzeichnet, dass** der Grünling axial in eine offene Seite einer formgenau auf den Grünling abgestimmten Aufnahme einer Matrize eingebracht wird, die vor dem Einbringen des Grünlings bereits zumindest weitgehend auf Sintertemperatur erhitzt worden ist, und dass anschließend der Grünling koaxial zur Aufnahme wenigstens von der offenen Seite der Aufnahme her mit dem Sinterdruck beaufschlagt wird.

2. Verfahren nach Anspruch 1, **dadurch gekennzeichnet, dass** der Grünling hülsenförmig geformt auf einen Trägerkörper koaxial aufgebracht und an diesem fixiert wird, und dass die fixierte Einheit koaxial in die Aufnahme der Matrize eingeführt wird, wobei lediglich der Grünling von gegenüberliegenden Stirnflächen her koaxial mit dem Sinterdruck beaufschlagt wird.

3. Vorrichtung zur Durchführung eines Verfahrens nach Anspruch 1, **dadurch gekennzeichnet, dass** zur Aufnahme des Grünlings eine zu wenigstens einer Seite hin offene Aufnahmekammer einer Matrize vorgesehen ist, der wenigstens ein von der offenen Seite der Aufnahmekammer auf den Grünling einen Sinterdruck aufbringendes Pressmittel (15, 19) zugeordnet ist, und die von einer Heizeinrichtung (18) umgeben ist, die die Aufnahmekammer (16) auf Sintertemperatur erhitzen kann.

4. Vorrichtung nach Anspruch 3, **dadurch gekennzeichnet, dass** die Aufnahmekammer als über ihre gesamte Länge mit gleichbleibendem Querschnitt versehene Aufnahmeröhre (16) gestaltet ist, die zu gegenüberliegenden Seiten hin offen ist, wobei der Röhrenquerschnitt auf einen Querschnitt des zu sinternden Grünlings derart abgestimmt ist, dass der Grünling passgenau axial in die Aufnahmeröhre (16) eintaucht.

5. Vorrichtung nach Anspruch 4, **dadurch gekennzeichnet, dass** als Pressmittel zwei koaxial zueinander angeordnete und in zueinander entgegengesetzten Richtungen druckbeaufschlagbare Pressstempel (15, 19) vorgesehen sind, die von gegenüberliegenden Seiten her in die Aufnahmeröhre (16) eintauchen.

6. Vorrichtung nach Anspruch 3, **dadurch gekennzeichnet, dass** die Matrize (14) wenigstens in einem die Aufnahmekammer (16) ummantelnden Umgebungsbereich zumindest abschnittsweise aus einem verschleißfesten und bei Sintertemperaturen formstabilen, wärmeleitenden Werkstoff hergestellt ist.

7. Vorrichtung nach Anspruch 6, **dadurch gekennzeichnet, dass** die Matrize (14) zumindest abschnittsweise rotationssymmetrisch gestaltet ist und von einem Isolationsmantel (20) umgeben ist.

8. Vorrichtung nach Anspruch 5, **dadurch gekennzeichnet, dass** die gegenüberliegenden Pressstempel (15, 19) an ihren Stirnflächen mit jeweils einem Ringbund (22) versehen ist, der ohne Axialbelastung der Stirnfläche eines koaxial in dem hülsenförmigen Grünling fixierten Trägerkörpers (13) axial auf die zugeordnete Gegenstirnfläche des Grünlings (12) einen für die Sinterung notwendigen Pressdruck ausübt.

9. Vorrichtung nach Anspruch 5, **dadurch gekennzeichnet, dass** wenigstens ein Pressstempel (19) als die fertig gesinterte Diamantperle (D) ausstoßende Auswerfer beweglich gestaltet ist.

10. Verfahren zum Herstellen von kaltgepressten Grünlingen, die in einem späteren Verfahrensgang zu Diamantperlen für Diamantsägeseile endgefertigt werden, **dadurch gekennzeichnet, dass** ein pulverförmiger Diamantbelag in einer ersten Verfahrensstufe durch Kaltpressen zu einer Formhülse (12) vorverdichtet und anschließend koaxial in die Formhülse (12) ein Trägerkörper (13) mit Spiel eingesetzt wird, und dass in einer zweiten Verfahrensstufe die Formhülse (12) auf dem Trägerkörper (13) zu einem kaltgepressten Grünling unter Umspannung des Trägerkörpers (13) endverdichtet wird.

11. Diamantperle mit einer auf einen Trägerkörper aufgesinterten Diamantbelaghülse, **dadurch gekennzeichnet, dass** der Trägerkörper (13) für die Diamantbelaghülse mit Außenprofilierungen, insbesondere mit einer Rändelung, versehen ist.

12. Anlage zur Herstellung von Diamantperlen für Diamantsägeseile, mit einer Kaltpresse sowie mit einer Sintervorrichtung, **dadurch gekennzeichnet, dass** zwischen der Kaltpresse (1) und der Sintervorrichtung (6) eine Trennmittelauftragsvorrichtung (4) vorgesehen ist, und dass die Kaltpresse (1), die Trennmittelauftragsvorrichtung (4) und die Sintervorrichtung (6) durch Fördereinrichtungen (5) miteinander verbunden sind, mittels derer die fixierten Einheiten aus Grünlingen (12) und Trägerkörper (13) automatisch von der Kaltpresse (1) zur Trennmittelauftragsvorrichtung (4) und weiter zur Sintervorrichtung (6) förderbar sind.

## Claims

1. Method of producing a diamond-containing tool segment which is sintered from a cold-pressed green body, **characterized in that** the green body is introduced axially into an open side of a receptacle of a die that is made to match exactly the shape of the green body and has already been heated at least largely to sintering temperature before the green body is introduced, and **in that** the green body is subsequently subjected to the sintering pressure coaxially in relation to the receptacle, at least from the open side of the receptacle.

2. Method according to claim 1, **characterized in that** the green body is shaped in the form of a sleeve and is mounted coaxially on a supporting body and fixed to it, and **in that** the fixed unit is introduced coaxially into the receptacle of the die, only the green body being subjected to the sintering pressure coaxially from opposite end faces.

3. Device for carrying out a method according to claim 1, **characterized in that**, for receiving the green body, a receiving chamber of the die that is open on at least one side is provided, assigned to which chamber is at least one pressing means (15, 19), applying a sintering pressure to the green body from the open side of the receiving chamber, and which chamber is surrounded by a heating device (18), which can heat the receiving chamber (16) to sintering temperature.

4. Device according to claim 3, **characterized in that** the receiving chamber is designed as a receiving tube (16) which is provided with a constant cross section over its entire length and is open to opposite sides, the tube cross section being made to match a cross section of the green body to be sintered in such a way that the green body axially enters the receiving tube (16) with an exact fit.

5. Device according to claim 4, **characterized in that** two pressing rams (15, 19), which are arranged coaxially in relation to each other and can be subjected to pressure in opposite directions, are provided and enter the receiving tube (16) from opposite sides.

6. Device according to claim 3, **characterized in that**, at least in a surrounding region that encloses the receiving chamber (16), the die (14) is produced at least in certain portions from a heat-conducting material that is wear-resistant and dimensionally stable at sintering temperatures.

7. Device according to claim 6, **characterized in that** the die (14) is shaped at least in certain portions in a rotationally symmetrical manner and is surrounded by an insulating jacket (20).

8. Device according to claim 5, **characterized in that** the opposing pressing rams (15, 19) are provided on their end faces in each case with an annular collar (22), which axially exerts on the assigned opposing end face of the green body (12) a pressing pressure necessary for the sintering, without axially loading the end face of a supporting body (13) fixed coaxially in the sleeve-shaped green body.

9. Device according to claim 5, **characterized in that** at least one pressing ram (19) is movably designed, as an ejector ejecting the finished-sintered diamond bead (D).

10. Method of producing cold-pressed green bodies which are finished in a later phase of the method into diamond beads for diamond sawing cables, **characterized in that**, in a first stage of the method, a powdered diamond coating is precompacted by cold pressing to form a moulded sleeve (12) and a supporting body (13) is subsequently inserted coaxially into the moulded sleeve (12) with play, and **in that**, in a second stage of the method, the moulded sleeve (12) is finally compacted on the supporting body (13) to form a cold-pressed green body, with the supporting body (13) clasped.

11. Diamond bead with a diamond coating sleeve sintered onto a supporting body, **characterized in that** the supporting body (13) for the diamond coating sleeve is provided with external profilings, in particular with knurling.

12. Installation for producing diamond beads for diamond sawing cables, comprising a cold press and a sintering device, **characterized in that** a release-agent application device (4) is provided between the cold press (1) and the sintering device (6), and **in that** the cold press (1), the release-agent application device (4) and the sintering device (6) are connected to one another by conveying mechanisms (5), by means of which the fixed units comprising green bodies (12) and supporting bodies (13) can be automatically conveyed from the cold press (1) to the release-agent application device (4) and on to the sintering device (6).

## Revendications

1. Procédé de fabrication d'un segment diamanté pour un outil, fritté à partir d'une ébauche crue comprimée à froid, **caractérisé en ce que** l'ébauche crue est amenée axialement dans un côté ouvert d'un logement dont la forme est adaptée avec précision à l'ébauche crue, ménagé dans une matrice qui a été chauffée au moins largement à la température de frittage avant que l'ébauche crue ait été amenée et **en ce qu'**ensuite la pression de frittage est appliquée sur l'ébauche crue coaxialement par rapport au logement, au moins par le côté ouvert du logement.

2. Procédé selon la revendication 1, **caractérisé en ce que** l'ébauche crue présente la forme d'une douille et est placée coaxialement sur un corps de support et fixée à ce dernier et **en ce que** l'unité fixée est insérée coaxialement dans le logement de la matrice, la pression de frittage n'étant appliquée que sur l'ébauche crue, coaxialement et par des surfaces frontales opposées.

3. Dispositif en vue de la mise en oeuvre d'un procédé selon la revendication 1, **caractérisé en ce que** pour recevoir l'ébauche crue on prévoit une chambre de réception, ouverte au moins sur un côté, d'une matrice à laquelle est associée au moins un moyen de compression (15, 19) qui applique une pression de frittage sur l'ébauche crue par le côté ouvert de la chambre de réception et qui est entourée par un dispositif de chauffage (18) capable de chauffer la chambre de réception (16) jusqu'à la température de frittage.

4. Dispositif selon la revendication 3, **caractérisé en ce que** la chambre de réception a la forme d'un tube de réception (16) qui a la même section transversale sur toute sa longueur, qui est ouvert sur ses côtés opposés et dont la section transversale correspond à une section transversale de l'ébauche crue à fritter, de telle sorte que l'ébauche crue s'enfonce axialement et de manière étroitement ajustée dans le tube de réception (16).

5. Dispositif selon la revendication 4, **caractérisé en ce que** comme moyen de compression, on prévoit deux poussoirs de compression (15, 19) disposés coaxialement l'un par rapport à l'autre, sur lesquels une pression peut être appliquée dans des directions mutuellement opposées et qui s'enfoncent dans le tube de réception (16) par des côtés opposés.

6. Dispositif selon la revendication 3, **caractérisé en ce qu'**au moins dans une partie périphérique qui entoure la chambre de réception (16), au moins certaines parties de la matrice (14) sont constituées d'un matériau thermiquement conducteur, indéformable à la température de frittage et résistant à l'usure.

7. Dispositif selon la revendication 6, **caractérisé en ce qu'**au moins certaines parties de la matrice (14) ont une symétrie de rotation et sont entourées par une enveloppe isolante (20).

8. Dispositif selon la revendication 5, **caractérisé en ce que** les poussoirs de compression (15, 19) opposés sont tous deux dotés sur leur surface frontale d'un collet annulaire (22) qui, sans solliciter axialement la surface frontale d'un corps de support (13) fixé coaxialement dans l'ébauche crue en forme de douille, exerce une poussée de compression nécessaire pour le frittage axialement sur la surface frontale opposée associée de l'ébauche crue (12).

9. Dispositif selon la revendication 5, **caractérisé en ce qu'**au moins un poussoir de compression (19) est configuré de manière mobile comme un éjecteur qui éjecte la perle diamantée (D) frittée terminée.

10. Procédé de fabrication d'ébauches crues comprimées à froid qui, dans une étape de traitement ultérieure, sont transformées en perles diamantées pour câbles de scie diamantée, **caractérisé en ce que** dans une première étape de traitement par compression à froid, une couche de poudre de diamant est pré-comprimée pour former une douille moulée (12) et ensuite un corps de support (13) est inséré coaxialement avec jeu dans la douille moulée (12) et **en ce que** dans une deuxième étape de traitement, la douille moulée (12) placée sur le corps de support (13) reçoit sa compression finale pour obtenir une ébauche crue comprimée à froid serrée sur le corps de support (13).

11. Perle diamantée qui présente une douille d'enveloppe diamantée frittée sur un corps de support, **caractérisée en ce que** le corps de support (13) prévu pour la douille d'enveloppe diamantée est doté de profils extérieurs et en particulier d'un moletage.

12. Installation de fabrication de perles diamantées pour câbles de scie diamantée, qui présente une presse à froid ainsi qu'un dispositif de frittage, **caractérisée en ce qu'**entre la presse à froid (1) et le dispositif de frittage (6) est prévu un dispositif (4) d'application d'un moyen de séparation et **en ce que** la presse à froid (1), le dispositif (4) d'application d'un moyen de séparation et le dispositif de frittage (6) sont reliés les uns aux autres par le dispositif de transport (5) au moyen duquel les unités fixées constituées d'ébauches crues (12) et de corps de support (13) peuvent être transportées automatiquement depuis la presse à froid (1) jusqu'au dispositif (4) d'application d'un moyen de séparation et ensuite vers le dispositif de frittage (6).
